# EUROPEAN PATENT SPECIFICATION

(11) **EP 3 571 923 B1**
(45) Date of publication and mention of the grant of the patent: **14.04.2021**
(21) Application number: 19175830.9
(22) Date of filing: 22.05.2019
(51) Int. Cl.: A01G 3/08, A01G 23/099, A01G 7/06

(54) **A TOOL HEAD AND USE OF THE TOOL HEAD, AND A METHOD FOR REGULATING TOP SHOOT GROWTH OF A TREE**
WERKZEUGKOPF UND VERWENDUNG DES WERKZEUGKOPFES UND VERFAHREN ZUR REGELUNG DES SPROSSWACHSTUMS EINES BAUMES
TÊTE D'OUTIL ET UTILISATION DE LA TÊTE D'OUTIL ET PROCÉDÉ DE RÉGULATION DE LA CROISSANCE DES POUSSES SUPÉRIEURES D'UN ARBRE

(30) Priority: 22.05.2018 DK PA201870309
(43) Date of publication of application: 27.11.2019
(73) Proprietor: Kæhlershøj, Jørgen Hviid, 5471 Søndersø (DK)
(72) Inventor: KÆHLERSHØJ, Jørgen Hviid, 5471 Søndersø (DK); LARSEN, Jacob H., 6100 Haderslev (DK)
(74) Representative: Patrade A/S

(56) References cited:
- EP-A1- 1 862 273
- WO-A1-00/72660
- CN-U- 205 336 956
- CN-U- 205 812 905
- US-A- 4 188 718

## Description

### Field of the Invention

The present invention relates to a tool head and the use of the tool head for regulating top shoot growth of a tree by cutting bark of the tree.

The present invention relates to a method for regulating top shoot growth of a tree by cutting the bark of the tree.

### Background of the Invention

The production of Christmas trees is a large industry. When producing Christmas trees the top shoot growth of the spruce trees must be regulated in the later stages of the spruce trees growth.

If the top shoot growth is not regulated, the vertical distance between the limbs of the tree become too large for use as a Christmas tree.

At present the top shoot growth is regulated using a growth inhibitor, which is applied to the top shoot growth every year at least once. This is not an environment friendly solution and thus there is a need for a new and environmentally friendly solution to regulating the top shot growth of trees.

DK173343B1 suggests using a two-bladed tool for applying two incisions to the newly formed top shoot growth for preventing the transportation of nutrition to the top shoot growth. The blades of the two-bladed tool are displaced to prevent a circular incision around the top shoot growth. The two-bladed tool is further provided with stop plates for preventing the incision from becoming too deep. One problem with the two-bladed tool is that the risk of crushing the top shoot growth is too large. If the top shoot growth is crushed then the spruce tree cannot be sold as a Christmas tree or it must be sold at a reduced price. Thus, the adoption of the two-bladed tool has been limited and growth inhibitor is still the preferred method of regulating.

US730299 discloses a tool for sap-yielding trees. The tool comprises a tongs-like structure having two arms pivoted together between their ends and each having at one end a head to which a jaw is secured. A channelling or grooving knife is adjustably carried by one of the heads, and when the jaws are closed upon the trunk of the tree the knife is in the position to cut the groove or channel in the bark of the tree.

### Object of the Invention

It is an object to provide a tool head and a method for regulating top shot growth which overcome the limitations of the prior art.

### Description of the Invention

An object is achieved by a tool head for regulating top shoot growth of a tree by cutting bark, according to claim 1. The tool head comprises a first and a second jaw part and a first and a second punch. The first and second jaw parts are interconnected and are at a first and second distal end be connected to the respective first and the second punch.

Each punch comprises a cut end in communication with a disposal end via a channel.

The cut end may be sharp for increasing the cutting efficiency.

The channel acts as a waste shaft for removed bark, which is important when cutting a plurality of trees.

The channel will also make it easy to clean the punches if bark gets stuck.

The jaw parts are pivotal such that a punch distance between the punches is changeable. If the punch distance becomes shorter than the diameter of the stem to be cut, then the tool head will cut the stem, and bark will be removed from the tree.

The punches may face each other when cutting the stem, such that the force applied from the punches to the stem is substantially perpendicular to the surface of the stem; this enables a cleaner cut of the bark and the risk of unwanted damage of the stem is reduced.

The jaw parts may be pivotal to an open position where the punches are far apart.

When the tool head is in the open position, the tool head can be moved near the stem of a tree. A user may then force the jaw parts together where each punch will cut a piece of bark from the stem of the tree. Thereby, the tool head removes a piece of bark.

The size of the punches determines the amount of bark removed per cut from the stem, the top shoot growth will slow as a function of bark removed.

The tool head may especially be used to regulating top shoot growth of a spruce.

The tool head is may especially be used to regulating top shoot growth of a spruce to be used as a Christmas tree.

The tool head may be connected to one or two handles for increasing the usability, and increase the torque.

In an aspect at least one of the punches may have a nosing perpendicular to the channel. The nosing may be positioned at a cut distance from the cut end.

The cut distance ensures that a cut has an optimum cut depth which is neither too shallow nor too deep.

Furthermore the nosing will also reduce the pressure between the punches and the stem when the bark has been cut as the nosing will increase the area of the contact surface between the punches and the stem. Thus, the risk of damaging the stem further than the cutting of bark is reduced significantly.

The nosing may be a nut, and the punch may be threaded for connection with the nut. This will enable the cut distance to be changed, which can be necessary when cutting trees of different age or different kind of trees.

In an embodiment both punches may have a nosing perpendicular to the channel

In an aspect at least one jaw part may comprise a threaded bore positioned at the distal.

At least one punch may comprise a punch thread between the cut end and the disposal end.

The threaded bore and the punch thread are mutually complementary such that the at least one punch can be detached from or attached to the at least one bore.

This will enable the user to change a dull punch or change between punches having different cut ends or cut distances or different lengths, thereby enabling different punch distances.

The punch distance may also be changed by rotating the punch engaging the threaded bore.

In an embodiment both jaw parts may comprise a threaded bore positioned at the distal end.

In an aspect, the tool head may comprise means for detaching and attaching the first and/or second punch to the first and/or second jaw part respectively.

The means may be plug and socket.

The means may be a clamp on the first and/or second jaw part for holding the receptive first and/or second punch.

This will enable the user to change a dull punch or change between punches having different cut ends or cut distances or different lengths thereby enabling different punch distances.

In an aspect, the tool head may further comprise at least one lock nut connected to the punch thread and positioned between the disposal end and the jaw part.

The lock nut will further secure the punch to the tool head.

In an aspect, the tool head may further comprise a stem adjuster which may be positioned between the jaw parts. The stem adjuster may have a stem stop.

The stem adjuster with the stem stop is arranged such that when the tool head engages with a stem of a tree, then the punches will engage the stem substantially perpendicularly to the stem. This will ensure a clean cut of the bark from the stem, and the risk of creating more damage to the bark than intended is lowered.

The stem adjuster may have means for adjusting an extent of the stem stop. This will enable the stem adjuster to adjust to stems having different widths. Typically each generation of trees will have approximately the same width if the trees are placed within the same area, but there may be variation between generations.

The stem adjuster may be adjustable by having a threaded adjuster bore and the stem stop having a threaded part complementary to the threaded adjuster bore, such that the stem stop can be moved back and forth.

In an aspect the jaw parts may be interconnected at a joint defining a joint plane. Each jaw part may have a twisted part such that the distal end is substantially perpendicular to the joint plane.

This embodiment has been shown to be particularly useful when cutting trees as it makes it easy to determine whether the tool head engages properly with a stem of a tree.

The stem adjuster may be connected to one of the jaw parts. This is a simple solution where the tool head is made with as few free parts as possible.

In an embodiment the tool head has a first and a second stem adjuster, which are respectively connected to the first and second jaw part.

In an aspect, the channel may have a cross-section which is circular or triangular or square or polygonal.

The stems, which are cut, will heal over time but the damage will still be visible. Thus, a person skilled in the art will be able to recognize whether the stem has been cut by a punch having a circular or triangular or square or polygonal cross-section.

Each cross-section variant may be associated with information such as the person cutting or the month of cut or the cut size.

A punch comprises a cut end in communication with a disposal end via a channel

The punch may further comprise a nosing perpendicular to the channel. The nosing may be positioned at a cut distance from the cut end. The cut distance may be adjusted for ensuring a proper cut depth which is neither too shallow nor too deep.

The punch may further comprise a punch thread between the cut end and the disposal end for connecting with a threaded bore of a jaw part. This will enable the punch to be removed from a tool head.

An object is achieved by a method for regulating top shoot growth of a tree , according to claim 9, comprising the acts of:
- providing a tool head;
- positioning the tool head near a stem of the tree;
- cutting the bark of the tree.

### Example

First an act of providing a tool head may be performed.

This may be followed by an act of positioning the tool head near a stem of the tree.

Lastly this may be followed by at least one act of cutting the bark of the tree.

The top shoot growth will grow more slowly, as a function of bark removed.

An object is achieved by the use of a tool head for regulating top shoot growth of a tree, according to claim 10.

### Description of the Drawing

Fig. 1 illustrates an exploded view of a tool head;
Fig. 2 illustrates a side view (I) and top view (II) of a tool head in a cut position;
Fig. 3 illustrates a front view (I) and a side view (II) of a tool head in an open position;
Fig. 4 illustrates the adjustable parts of a tool head;
Fig. 5 illustrates a tool head cutting a tree; and
Fig. 6 illustrates a method for regulating top shoot growth of a tree.

### Detailed Description of the Invention

| | |
|---|---|
| Tool head | 10 |
| Jaw part | 20 |
| Twisted part | 22 |
| Distal end | 24 |
| Threaded bore | 26 |
| Joint | 28 |
| Punch | 30 |
| Cut end | 32 |
| Nosing | 34 |
| Disposal end | 36 |
| Channel | 38 |
| Punch thread | 39 |
| Lock nut | 40 |
| Stem adjuster | 50 |
| Stem stop | 52 |
| Punch distance | 60 |
| Cut position | 70 |
| Open position | 80 |
| Tree | 90 |
| Top shoot growth | 92 |
| Method for regulating top shoot growth | 100 |
| Providing | 200 |
| Positioning | 300 |
| Cutting | 400 |

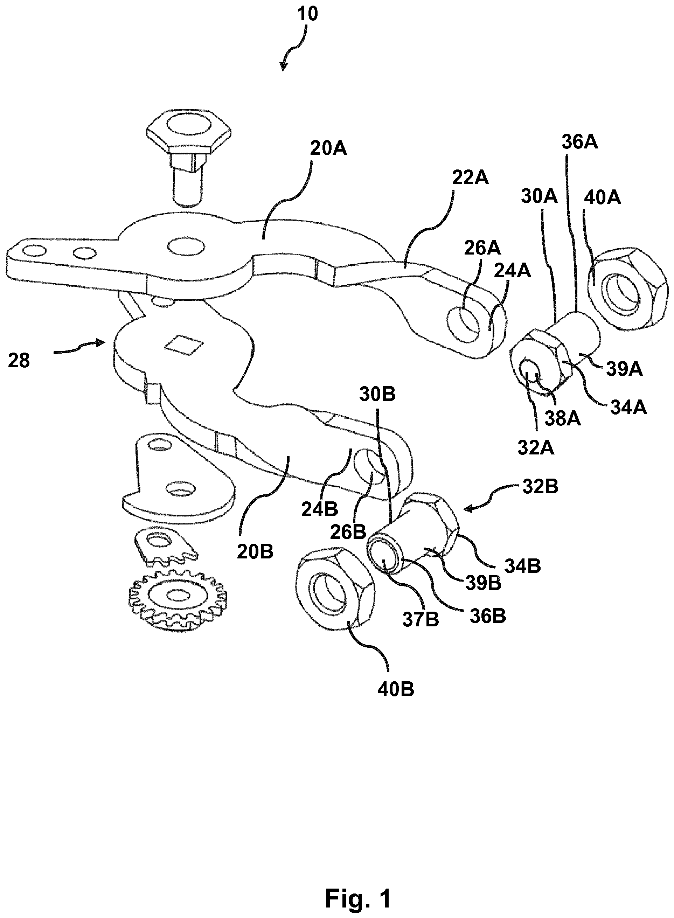

Fig. 1 illustrates an exploded view of a tool head 10 for regulating top shoot growth of a tree 90 (not shown) by cutting bark.

The tool head 10 comprises a first and a second jaw part 20A, 20B, and a first and a second punch 30A, 30B.

The first and second jaw parts 20A, 20B are interconnected and are at a first and second distal end 24A, 24B connected to the respective first and the second punch 30A, 30B.

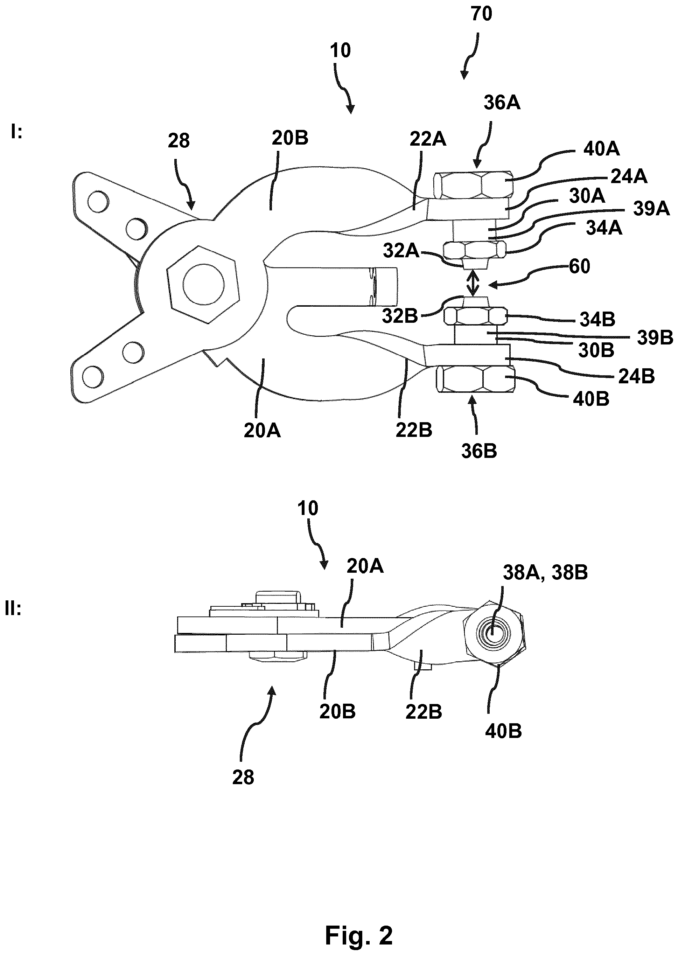

Each punch 30A, 30B comprises a cut end 32A, 32B in communication with a disposal end 36A, 36B via a channel 38A, 38B (see fig. 2).

The jaw parts 20A, 20B are pivotal such that a punch distance 60 (see fig. 2) between the punches 30A, 30B is changeable.

Each punch 30A, 30B has a nosing 34A, 34B perpendicular to the respective channel 38A, 38B. Each nosing 34A, 34B is positioned at a cut distance from the respective cut ends 32A, 32B.

Each jaw part 20A, 20B comprises a threaded bore 26A, 26B positioned at the respective distal ends 24A, 24B.

Each punch 30A, 30B comprises a punch thread 39A, 39B between the cut end 32A, 32B and the disposal end 36A, 36B.

Each punch tread 39A, 39B is complementary with the respective threaded bore 26A, 26B.

The tool head 10 further comprises two lock nuts 40A, 40B.

Each lock nut 40A, 40B is connected to the respective punch thread 39A, 39B and is positioned between the respective disposal end 36A, 36B and the respective jaw part 20A, 20B.

The jaw parts 20A, 20B are interconnected at a joint 28 defining a joint plane.

Each jaw part 20A, 20B has a twisted part 22A, 22B such that the distal end 24A, 24B is substantially perpendicular to the joint plane.

Fig. 2 illustrates a side view (I) and top view (II) of a tool head 10 in a cut position 70.

The tool head 10 comprises a first and a second jaw part 20A, 20B, and a first and a second punch 30A, 30B.

The first and second jaw parts 20A, 20B are interconnected and are at a first and second distal end 24A, 24B connected to the respective first and the second punch 30A, 30B.

Each punch 30A, 30B comprises a cut end 32A, 32B in communication with a disposal end 36A, 36B via a channel 38A, 38B.

The jaw parts 20A, 20B are pivotal such that a punch distance (60) between the punches (30A, 30B) is changeable.

Each punch 30A, 30B has a nosing 34A, 34B perpendicular to the respective channel 38A, 38B. Each nosing 34A, 34B is positioned at a cut distance from the respective cut ends 32A, 32B.

Each jaw part 20A, 20B comprises a threaded bore 26A, 26B (not shown) positioned at the respective distal ends 24A, 24B.

Each punch 30A, 30B comprises a punch thread 39A, 39B between the cut end 32A, 32B and the disposal end 36A, 36B.

Each punch tread 39A, 39B is complementary with the respective threaded bore 26A, 26B (not shown).

The tool head 10 further comprises two lock nuts 40A, 40B.

Each lock nut 40A, 40B is connected to the respective punch thread 39A, 39B and is positioned between the respective disposal end 36A, 36B and the respective jaw part 20A, 20B.

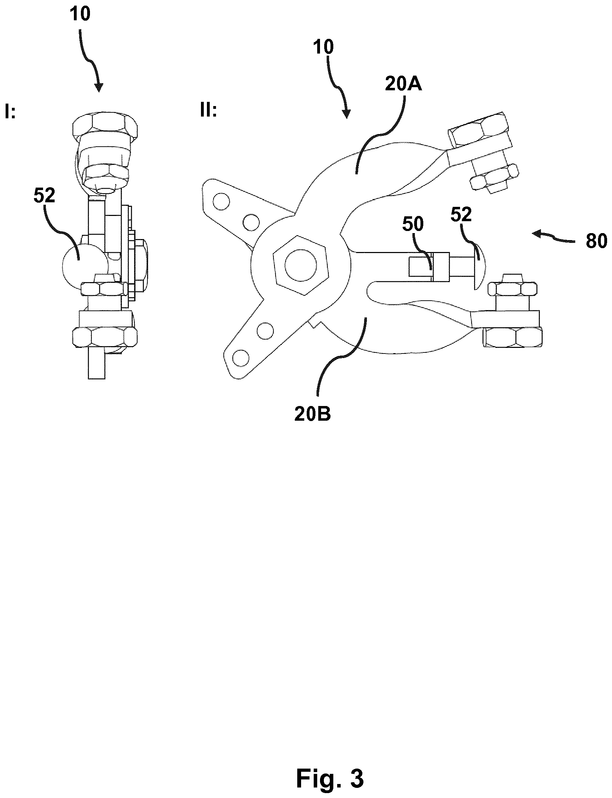

Fig. 3 illustrates a front view (I) and a side view (II) of a tool head 10 in an open position 80. The tool head 10 is similar to Fig. 2.

The tool head 10 further comprises a stem adjuster 50 positioned between the jaw parts 20A, 20B. The stem adjuster 50 has a stem stop 52 and means for adjusting an extent of the stem head 52.

The stem adjuster 50 may be adjustable by having a threaded adjuster bore, and the stem stop 52 has a thread complementary to the threaded adjuster bore, such that the stem stop 52 can be moved back and forth.

The stem adjuster 50 is connected to the jaw part 20B.

The part of the stem adjuster 50 connected to the jaw part 20B has a lip with the threaded adjuster bore for the stem stop 52.

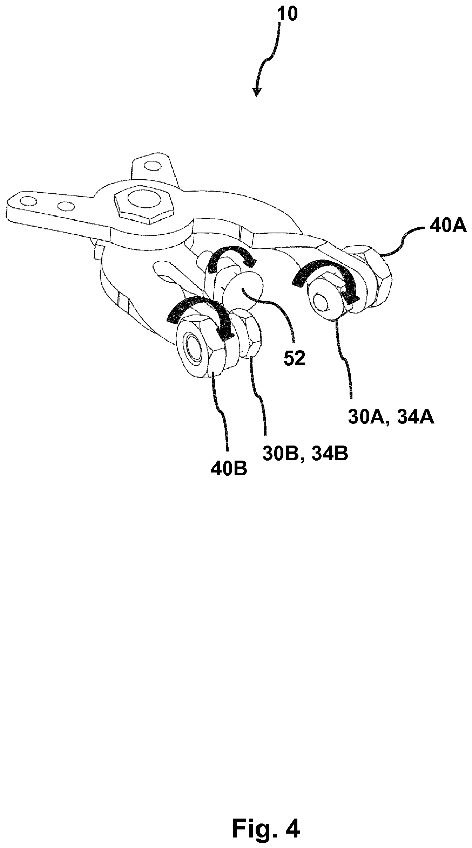

Fig. 4 illustrates the adjustable parts of a tool head 10.

Each lock nut 40A, 40B is adjustable, such that the punch distance 60 can be adjusted.

Each punch 30A, 30B is adjustable, such that the punch distance 60 can be adjusted. Each nosing 34A, 34B is adjustable such that a cut distance can be adjustable.

The stem stop 52 may be adjustable such that the tool head 10 can be adjusted to different stem widths.

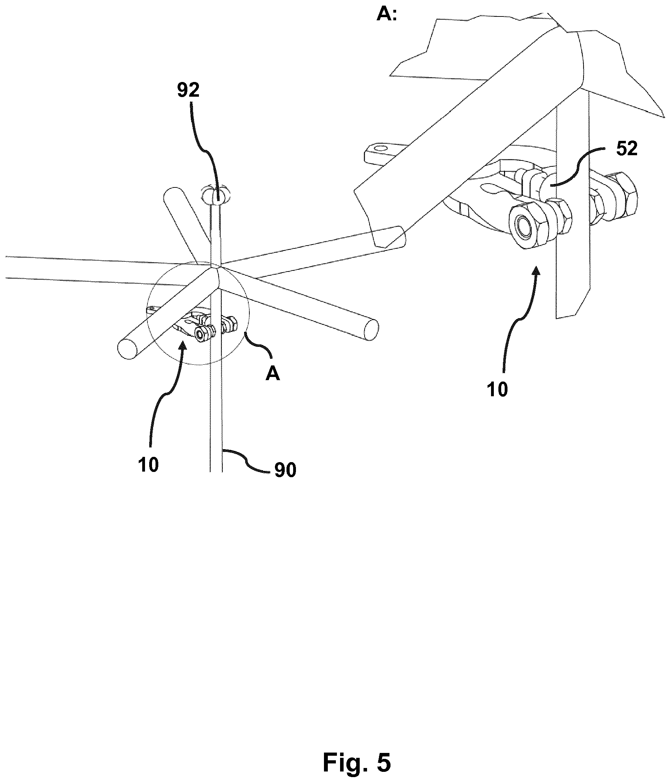

Fig. 5 illustrates a tool head 10 cutting a tree 90. The stem stop 52 of the tool head 10 is placed at the stem of the tree 90. The stem of the tree 90 may then be cut thereby removing a portion of the bark which will lower the transport of nutrition to the top shoot growth 92.

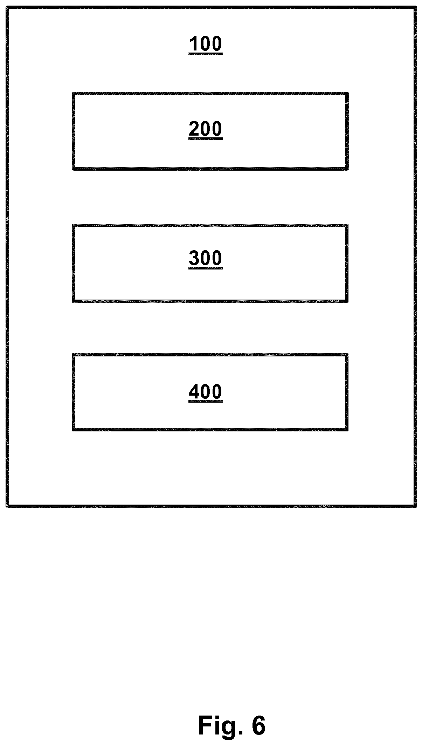

Fig. 6 illustrates a method 100 for regulating top shoot growth 92 (not shown) of a tree 90 (not shown).
The method 100 for regulating top shoot growth 92 of tree 90 comprising the acts of:
   - providing 200 a tool head 10 (not shown);
   - positioning 300 the tool head 20 (not shown) near a stem of the tree 90;
   - cutting 400 bark of the tree 90.

The act of cutting 400 removes bark from the tree 90.

## Claims

1. A tool head (10) for regulating top shoot growth (92) of a tree (90) by cutting bark, the tool head (10) comprises a first and a second jaw part (20A, 20B), the first and second jaw parts (20A, 20B) are interconnected, **characterised in that** the tool head (10) comprises a first and a second punch (30A, 30B), the first and second jaw parts (20A, 20B) are at a first and second distal end (24A, 24B) connected to the respective first and the second punch (30A, 30B), each punch (30A, 30B) comprises a cut end (32A, 32B) in communication with a disposal end (36A, 36B) via a channel (38A, 38B), the jaw parts (20A, 20B) are pivotal such that a punch distance (60) between the punches (30A, 30B) is changeable.

2. The tool head (10) according to claim 1, **characterised in that** at least one of the punches (30A, 30B) has a nosing (34A, 34B) perpendicular to the channel (38), the nosing (34A, 34B) is positioned at a cut distance from the cut end (32A, 32B).

3. The tool head (10) according to claim 1 or 2, **characterised in that** the at least one jaw part (20A, 20B) comprises a threaded bore (26A, 26B) positioned at the distal end (24A, 24B), and at least one punch (30A, 30B) comprises a punch thread (39A, 39B) between the cut end (32A, 32B) and the disposal end (36A, 36B) for connecting with the threaded bore (26A, 26B).

4. The tool head (10) according to claim 1 or 2, **characterised in that** the tool head (10) comprises means for detaching and attaching the first and/or second punch (30A, 30B) to the first and/or second jaw part (20A, 20B) respectively.

5. The tool head (10) according to one or more of claims 1-4, **characterised in that** the tool head (10) further comprises at least one lock nut (40A, 40B) connected to the punch thread (39A, 39B) and positioned between the disposal end (36A, 36B) and the jaw part (20A, 20B).

6. The tool head (10) according to one or more of claims 1-5, **characterised in that** the tool head (10) further comprises a stem adjuster (50) positioned between the jaw parts (20A, 20B), the stem adjuster (50) having a stem stop (52) and means for adjusting an extent of the stem stop (52).

7. The tool head (10) according to claim 6, **characterised in that** the jaw parts (20A, 20B) are interconnected at a joint (28) defining a joint plane, where each jaw part (20A, 20B) has a twisted part (22A, 22B) such that the distal end (24A, 24B) is substantially perpendicular to the joint plane, and the stem adjuster (50) is connected to one of the jaw parts (20A, 20B).

8. The tool head (10) according to one or more of claims 1-7, **characterised in that** the channel (38) has a cross-section which is circular or triangular or square or polygonal.

9. A method (100) for regulating top shoot growth (92) of a tree (90) comprising the acts of:
- providing (200) a tool head (10) according to one or more of claims 1-8;
- positioning (300) the tool head (10) near a stem of the tree (90);
- cutting (400) bark of the tree (90).

10. Use of a tool head (10) according to one or more of claims 1-8 for regulating top shoot growth (92) of a tree (90).

## Patentansprüche

1. Werkzeugkopf (10) zur Regelung des Sprosswachstums (92) eines Baumes (90) durch Schneiden von Rinde, wobei der Werkzeugkopf (10) ein erstes und ein zweites Backenteil (20A, 20B) umfasst, wobei das erste und das zweite Backenteil (20A, 20B) miteinander verbunden sind, **dadurch gekennzeichnet, dass** der Werkzeugkopf (10) einen ersten und einen zweiten Stempel (30A, 30B) umfasst, wobei sich das erste und das zweite Backenteil (20A, 20B) an einem ersten und zweiten distalen Ende (24A, 24B) befinden, die mit dem jeweiligen ersten und zweiten Stempel (30A, 30B) verbunden sind, wobei jeder Stempel (30A, 30B) ein über einen Kanal (38A, 38B) mit einem Entsorgungsende (36A, 36B) in Verbindung stehendes Schneideende (32A, 32B) umfasst, wobei die Backenteile (20A, 20B) schwenkbar sind, so dass ein Stempelabstand (60) zwischen den Stempeln (30A, 30B) veränderbar ist.

2. Werkzeugkopf (10) nach Anspruch 1, **dadurch gekennzeichnet, dass** mindestens einer der Stempel (30A, 30B) eine Ausladung (34A, 34B) senkrecht zum Kanal (38) aufweist, wobei die Ausladung (34A, 34B) in einem Schneideabstand vom Schneideende (32A, 32B) positioniert ist.

3. Werkzeugkopf (10) nach Anspruch 1 oder 2, **dadurch gekennzeichnet, dass** das mindestens eine Backenteil (20A, 20B) eine Gewindebohrung (26A, 26B) aufweist, die am distalen Ende (24A, 24B) positioniert ist, und mindestens ein Stempel (30A, 30B) ein Stempelgewinde (39A, 39B) zwischen dem Schneideende (32A, 32B) und dem Entsorgungsende (36A, 36B) zum Verbinden mit der Gewindebohrung (26A, 26B) umfasst.

4. Werkzeugkopf (10) nach Anspruch 1 oder 2, **dadurch gekennzeichnet, dass** der Werkzeugkopf (10) Mittel zum Abnehmen und Anbringen des ersten und/oder zweiten Stempels (30A, 30B) jeweils am ersten und/oder zweiten Backenteil (20A, 20B) umfasst.

5. Werkzeugkopf (10) nach einem oder mehreren der Ansprüche 1-4, **dadurch gekennzeichnet, dass** der Werkzeugkopf (10) ferner mindestens eine Sicherungsmutter (40A, 40B) umfasst, die mit dem Stempelgewinde (39A, 39B) verbunden ist und zwischen dem Entsorgungsende (36A, 36B) und dem Backenteil (20A, 20B) positioniert ist.

6. Werkzeugkopf (10) nach einem oder mehreren der Ansprüche 1-5, **dadurch gekennzeichnet, dass** der Werkzeugkopf (10) ferner einen Stammversteller (50) umfasst, der zwischen den Backenteilen (20A, 20B) positioniert ist, wobei der Stammversteller (50) einen Stammanschlag (52) und Mittel zum Verstellen eines Ausmaßes des Stammanschlags (52) aufweist.

7. Werkzeugkopf (10) nach Anspruch 6, **dadurch gekennzeichnet, dass** die Backenteile (20A, 20B) an einem Gelenk (28) miteinander verbunden sind, der eine Gelenkebene definiert, wobei jedes Backenteil (20A, 20B) einen gewundenen Teil (22A, 22B) aufweist, so dass das distale Ende (24A, 24B) im Wesentlichen senkrecht zur Gelenkebene ist und der Stammversteller (50) mit einem der Backenteile (20A, 20B) verbunden ist.

8. Werkzeugkopf (10) nach einem oder mehreren der Ansprüche 1-7, **dadurch gekennzeichnet, dass** der Kanal (38) einen Querschnitt aufweist, der kreisförmig oder dreieckig oder quadratisch oder vieleckig ist.

9. Verfahren (100) zur Regelung des Sprosswachstums (92) eines Baumes (90), umfassend die folgenden Handlungen:
- Bereitstellen (200) eines Werkzeugkopfes (10) nach einem oder mehreren der Ansprüche 1-8;
- Positionieren (300) des Werkzeugkopfes (10) in der Nähe eines Stammes des Baumes (90);
- Schneiden (400) von Rinde des Baumes (90).

10. Verwendung eines Werkzeugkopfes (10) nach einem oder mehreren der Ansprüche 1-8 zur Regelung des Sprosswachstums (92) eines Baumes (90).

## Revendications

1. Tête d'outil (10) permettant la régulation de la croissance des pousses supérieures (92) d'un arbre (90) en coupant l'écorce, la tête d'outil (10) comprenant une première et une seconde parties de mâchoires (20A, 20B), les première et seconde parties de mâchoires (20A, 20B) étant reliées entre elles, **caractérisée en ce que** la tête d'outil (10) comprend un premier et un second poinçons (30A, 30B), les première et seconde parties de mâchoires (20A, 20B) se trouvent à une première et une seconde extrémités distales (24A, 24B) reliées aux premier et second poinçons (30A, 30B) correspondants, chaque poinçon (30A, 30B) comprend une extrémité de coupe (32A, 32B) en communication avec une extrémité de mise au rebut (36A, 36B) via un canal (38A, 38B), les parties de mâchoire (20A, 20B) pouvant pivoter de sorte qu'une distance de poinçon (60) entre les poinçons (30A, 30B) peut être modifiée.

2. Tête d'outil (10) selon la revendication 1, **caractérisée en ce qu'**au moins un des poinçons (30A, 30B) a un arrondi (34A, 34B) perpendiculaire au canal (38), l'arrondi (34A, 34B) étant positionné à une distance de coupe de l'extrémité de coupe (32A, 32B) .

3. Tête d'outil (10) selon la revendication 1 ou 2, **caractérisée en ce que** l'au moins une partie de mâchoire (20A, 20B) comprend un alésage fileté (26A, 26B) positionné à l'extrémité distale (24A, 24B), et au moins un poinçon (30A, 30B) comprend un filetage de poinçon (39A, 39B) entre l'extrémité de coupe (32A, 32B) et l'extrémité de mise au rebut (36A, 36B) à relier à l'alésage fileté (26A, 26B).

4. Tête d'outil (10) selon la revendication 1 ou 2, **caractérisée en ce que** la tête d'outil (10) comprend un moyen de détacher et d'attacher les premier et/ou second poinçons (30A, 30B) à la première et/ou à la seconde partie de mâchoire (20A, 20B) respectivement.

5. Tête d'outil (10) selon une ou plusieurs des revendications 1 à 4, **caractérisée en ce que** la tête d'outil (10) comprend en outre au moins un contre-écrou (40A, 40B) relié au filetage de poinçon (39A, 39B) et positionné entre l'extrémité de mise au rebut (36A, 36B) et la partie de mâchoire (20A, 20B).

6. Tête d'outil (10) selon une ou plusieurs des revendications 1 à 5, **caractérisée en ce que** la tête d'outil (10) comprend en outre un dispositif d'ajustement de tige (50) positionné entre les parties de mâchoire (20A, 20B), le dispositif d'ajustement de tige (50) ayant une butée de tige (52) et un moyen d'ajuster une étendue de la butée de tige (52).

7. Tête d'outil (10) selon la revendication 6, **caractérisée en ce que** les parties de mâchoire (20A, 20B) sont reliées entre elles au niveau d'une articulation (28) définissant un plan d'articulation, où chaque partie de mâchoire (20A, 20B) a une partie tordue (22A, 22B) de sorte que l'extrémité distale (24A, 24B) est sensiblement perpendiculaire au plan d'articulation, et le dispositif d'ajustement de tige (50) est relié à une des parties de mâchoire (20A, 20B).

8. Tête d'outil (10) selon une ou plusieurs des revendications 1 à 7, **caractérisée en ce que** le canal (38) a une section transversale qui est circulaire ou triangulaire ou carrée ou polygonale.

9. Procédé (100) de régulation de la croissance des pousses supérieures (92) d'un arbre (90) comprenant les actions de :
- fourniture (200) d'une tête d'outil (10) selon une ou plusieurs des revendications 1 à 8 ;
- positionnement (300) de la tête d'outil (10) près d'une tige de l'arbre (90) ;
- coupe (40) de l'écorce de l'arbre (90).

10. Utilisation de la tête d'outil (10) selon une ou plusieurs des revendications 1 à 8 permettant la régulation de la croissance des pousses supérieures (92) d'un arbre (90).
